# EUROPÄISCHE PATENTANMELDUNG

(11) **EP 0 686 421 A1**
(43) Veröffentlichungstag der Anmeldung: **13.12.1995**
(21) Anmeldenummer: 95108831.9
(22) Anmeldetag: 08.06.1995
(51) Int. Cl.: B01D 45/08

(54) **Umweltfreundlicher Gasfilter**

(30) Priorität: 10.06.1994 DE 4420303
(71) Anmelder: Wacker-Chemie GmbH, D-81737 München (DE)
(72) Erfinder: Bosch, Erhard, Dr., D-84543 Winhoering (DE); Müller, Gerhard Otto, D-72631 Aichtal (DE); Neuhauser, Franz, A-5132 Geretsberg (AT)
(74) Vertreter: Deffner-Lehner, Maria

(57) **Zusammenfassung**

Die Erfindung betrifft einen Gasfilter, der mindestens ein Vorrichtungsteil, das klebrig oder nicht klebrig sein kann und einen Gasstrom bricht und/oder verwirbelt und mindestens ein Vorrichtungsteil, das klebrig ist und auf das der Gasstrom trifft, enthält sowie ein Recyclingverfahren für diesen Gasfilter.

## Beschreibung

Die Erfindung betrifft einen Gasfilter.

Gas wie Luft werden von Verbrennungsmotoren in erheblichen Mengen für die Verbrennung der Treibstoffe benötig. Diese Luft enthält stets Verunreinigungen, z.B. Staubteilchen, die zum Verschleiß wichtiger Motorbauteile führen, wenn sie nicht herausgefiltert werden. Im allgemeinen werden für die Reinigung der Luft bei Autos Trockenluftfilter eingesetzt. Im Gegensatz zu den ölbadfiltern bzw. zu Naßluftfiltern haben Trockenluftfilter eine auswechselbare Papierfilterpatrone. Diese Papierfilterpatrone besteht aus besonders ausgewählten Holz- und Pflanzenfasern, als Imprägniermittel werden vorzugsweise wärmehärtbare Phenolharze verwendet. Durch spezielle Gestaltung und Faltung wird die Oberfläche des Filters erheblich vergrößert. Die Feinheit der Filter liegt im Bereich von unter 1 µm und die Staubabscheidung beträgt nahezu 100 %. Typisch für diese Art von Luftfiltern ist, daß mit steigender Verschmutzung des Filters der Durchflußwiderstand (Maß für die Luftdurchlässigkeit) zunimmt. Mit steigender Fahrstrecke bzw. Einsatzdauer, in Abhängigkeit von den Umgebungsbedingungen, nimmt der Durchflußwiderstand zu. Es muß deshalb, wenn der vom Motorhersteller festgelegte, höchstzulässige Wert des Durchflußwiderstandes erreicht wird, eine Filterwartung durchgeführt werden. Die sicherste, schnellste und sauberste Wartung besteht im Austausch der erschöpften Filterpatrone gegen eine neue.

Die bisher verwendeten Luftfilter erfüllen ihre Aufgaben, wie die Zurückhaltung der verschleißerzeugenden Staubteilchen und Dämpfung der Ansauggeräusche, in hervorragender Weise, haben aber den Nachteil, daß sich der Durchflußwiderstand im Laufe der Zeit ändert, die bestehenden Filter einen relativ großen Platzbedarf haben, in der Formgestaltung nicht flexibel genug sind und die verbrauchten Luftfilter bei der Entsorgung zu Problemen führen.

GB-A 2 239 194 beschreibt einen Motorluftfilter aus Polyurethanschaum, der mit einem chlorierten Organophosphat behandelt wird, um den Luftfilter klebrig zu machen und so seine Filterleistung zu verbesseren.

US 3,682,690 beschreibt einen Luftfilter, der aus einem Gewebe, das mit einer klebrigen Beschichtung aus einem mit Wasser abwaschbarem Elastomer z.B. hochmolekularem Polyvinylchlorid versehen ist, besteht.

Nachteilig am Stand der Technik ist, daß die Filterleistung zwar gesteigert wird, jedoch der Durchflußwiderstand im Laufe der Zeit zunimmt.

Es ist Aufgabe der Erfindung, einen Gasfilter zu schaffen, der gegenüber dem Stand der Technik verbesserte Eigenschaften hat.

Dies wird mit einem erfindungsgemäßen Gasfilter erreicht.

Gegenstand der Erfindung ist ein Gasfilter, dadurch gekennzeichnet, daß er mindestens ein Vorrichtungsteil, das klebrig oder nicht klebrig ist und einen Gasstrom bricht und/oder verwirbelt und mindestens ein Vorrichtungsteil, das klebrig ist und auf das der Gasstrom trifft, enthält.

Der erfindungsgemäße Gasfilter ist zum Filtern aller Gase geeignet, die mit einer Strömungsgeschwindigkeit von vorzugsweise mindestens 0,01 m/s in den Gasfilter strömen. Derartige Gase können vorzugsweise Sauerstoff, Stickstoff, Edelgase, wie Neon, Krypton und Argon und bevorzugt Umgebungsluft sein. Der erfindungsgemäße Gasfilter filtert alle Partikel, vorzugsweise bis zu einer Größe von 0,01 µm, aus dem Gas.

Der erfindungsgemäße Gasfilter kann sich in einem je nach Anwendungszweck beliebig geformten Gehäuse befinden. Dieses Gehäuse weist mindestens eine Einlaßöffnung für das zu filternde Gas und mindestens eine Auslaßöffnung für das gefilterte Gas auf. Das Gas sollte mit einer Geschwindigkeit von mindestens 0,01 m/s und vorzugsweise 1-10 m/s einströmen. In diesem Gehäuse befinden sich mindestens zwei Vorrichtungsteile, wovon mindestens eines in dem Gehäuse so eingebaut ist, daß das einströmende Gas an diesem Vorrichtungsteil gebrochen und/oder verwirbelt wird. Dieses Vorrichtungsteil kann vorzugsweise bereits klebrig sein. Dies ist jedoch nicht unbedingt erforderlich. Um jedoch das Gas zu filtern muß zumindest das Vorrichtungsteil, auf das der gebrochene und/oder verwirbelte Gasstrom trifft, klebrig sein, damit sich die Staubpartikel darauf absetzen können.

Das Vorrichtungsteil, um den Gasstrom zu brechen und/oder zu verwirbeln, kann in jeder beliebigen Ausführungsform ausgestaltet sein, solange die Funktion des Brechens und/oder Verwirbelns eines Gasstroms gewährleistet ist. Es kann in Form von einer Kugel, eines Würfels, eines Kegels, eines Zylinders, einer Pyramide, und eines rechteckigen Körpers, wie mehreckigen Platten, die z.B. viereckig, fünfeckig, sechseckig, achteckig usw. ausgestaltet sein können, gestaltet sein. Die Platten können auch kreisförmig sein, wobei die kreisförmige und die viereckige Plattenform bevorzugt sind. Von diesen Formkörpern zum Brechen und/oder Verwirbeln eines Gasstroms muß mindestens einer vorliegen, bevorzugt enthält der erfindungsgemäße Gasfilter jedoch mehrere Formkörper, die gleich oder verschieden sein können. Eine Anzahl ist kaum zu nennen, da dies bei voluminösen Formkörpern wenige sein werden und bei Formkörpern mit geringem Volumen viele sein können, so daß ihre Zahl von 1 bis über 50 000 reichen kann. Diese Formkörper können im Gasstrom starr befestigt sein oder als lose Füllkörper vorliegen. Der Gasstrom kann um sie herum geleitet und/oder durch sie hindurch geleitet werden.

Falls der Gasstrom durch die Formkörper hindurch geleitet wird, muß zumindest eine geeignete Öffnung vorhanden sein. Diese kann in jeder Form ausgestaltet sein, wie als Kreis, Rechteck, das dreieckig, viereckig, fünfeckig, sechseckig, siebeneckig, achteckig usw. sein kann. Die Öffnung kann prinzipiell als jedes beliebige Vieleck ausgestaltet sein. Sie kann auch als Oval oder bei tieferen Formkörpern ihre Richtung im Formkörper beliebig ändern und mit, wie oben beschriebenen, Querschnitten ausgestaltet sein. Bevorzugte Querschnitte der Öffnung sind die Kreisform, die ovale Form und die quadratische Form. Vorzugsweise sind mehrere Öffnungen auf einem Formkörper. Diese sollten jedoch auf dem Formkörper so verteilt sein, daß zwischen ihnen mindestens eine gasundurchlässige, nicht durchbrochene Fläche von vorzugsweise mindestens 5 mm², vorzugsweise 2500 mm² erhalten bleibt.

Das Vorrichtungsteil, das den Gasstrom bricht und/oder verwirbelt, kann aus jedem beliebigen, für diesen Zweck geeigneten Material hergestellt sein. Insbesondere sollte es beim Einsatz in Verbindung mit Verbrennungsmotoren vorzugsweise Temperaturen von 150°C bis -65°C aushalten können. Geeignete Materialen sind metallische Verbindungen oder bevorzugt Thermoplasten wie Polyvinylchlorid, Polypropylen, Polyethylen, Polyamid usw. Dieser Formkörper kann selbst schon auf seiner Außenfläche, Material bedingt, klebrig sein. Die Öffnung kann auf ihrer Innenfläche klebrig oder nicht klebrig sein.

Die Größe des Formkörpers, der das Vorrichtungsteil darstellt, um einen Gasstrom zu brechen und/oder zu verwirbeln kann je nach dem Anwendungszweck ausgestaltet sein. Im Falle, daß im Gehäuse durch das der Gasstrom geleitet wird, nicht an diesem befestigte Formkörper, sondern zum Beispiel lose Füllkörper in Form einer Kugelpackung verwendet werden, werden die Formkörper vorzugsweise eine geringere Oberfläche haben, um so eine hohe Gesamtoberfläche der Filterpackung zu erreichen. Im Falle der Verwendung von losen Füllkörpern müssen diese jedoch das Volumen des Gasfiltergehäuse so ausfüllen, daß der Gasstrom von einem Füllkörper immer wieder gebrochen wird bevor er auf einen weiteren Füllkörper trifft. Eine derartige Filterpackung mit Füllkörpern kann aus Füllkörpern der gleichen Form und/oder Größe oder unterschiedlicher Formen und/oder Größen bestehen. Diese Füllkörper können auch Öffnungen der oben beschriebenen Art aufweisen.

Das Vorrichtungsteil, das klebrig ist, kann wie das oben beschriebene Vorrichtungsteil gestaltet sein, das einen Gasstrom bricht und/oder verwirbelt. Vorzugsweise wird es dieselbe Form haben wie das Vorrichtungsteil, das den Gasstrom bricht und/oder verwirbelt. Das klebrige Vorrichtungsteil kann aber auch eine andere Form als das Vorrichtungsteil, das den Gasstrom bricht und/oder verwirbelt, haben. Auf dem klebrigen Vorrichtungsteil werden die im Gasstrom enthaltenen Staubpartikel gebunden.

Das klebrige Vorrichtungsteil ist vorzugsweise permanent klebrig. Das klebrige Vorrichtungsteil kann aus einem, bereits Material bedingt, klebrigen Thermoplasten, wie Polyvinylchlorid, Polypropylen, Polyethylen, Polyamid hergestellt werden, wobei seine Klebrigkeit vorzugsweise mit bekannten Weichmachern wie Phthalsäureester, Phosphorsäureester, Adipinsäureester, Fettsäureester, Wachse usw. gesteigert wird.

Vorzugsweise wird der klebrige Formkörper, der in seiner Grundform aus geeigneten Materialen wie metallischen Verbindungen oder bevorzugt Thermoplasten wie Polyvinylchlorid, Polypropylen, Polyethylen, Polyamid usw. hergestellt wird, durch Beschichten mit einem beliebigen, bevorzugt permanent klebrigen Klebstoff klebrig gemacht.

Es können Klebstoffe auf beliebiger chemischer Basis eingesetzt werden, wenn sie die Bedingung erfüllen, im Bereich von Temperaturen von vorzugsweise 150 °C bis -65 °C permanent klebrig zu sein. Als Beispiele für die chemische Basis solcher Klebstoffe seien Polyvinylacetat und dessen Copolymere, Polychloropren, Nitrilkautschuk, Styrol-Butadien, Polyurethan, Polyamid, Polyester, Silicon usw. genannt.

Der Klebstoff kann auf die Formkörper prinzipiell durch Sprühen, Tauchen, Pinseln oder z.B. mit dem Roll-Coater aufgebracht werden. Im Falle des Tauchens und mit dem Roll-Coater wird die Beschichtung beidseitig aufgebracht. Prinzipiell ist dies nicht nötig, aber es erhöht das Staubaufnahmevermögen pro Oberfläche der Filtereinheit. Die Schichtdicke des Klebstoffauftrages kann zwischen 1 µm und 1 cm, vorzugsweise zwischen 5 µm und 1000 µm und besonders bevorzugt zwischen 10 µm und 500 µm betragen.

In einer bevorzugten Ausführungsform des erfindungsgemäßen Gasfilters wird mindestens ein im Gasfiltergehäuse starr befestigtes Vorrichtungssteil, das den Gasstrom bricht und/oder verwirbelt und das klebrig oder nicht klebrig sein kann, zusammen mit mindestens einem starr befestigten klebrigen Vorrichtungsteil so angeordnet, daß der gebrochene und/oder verwirbelte Gasstrom immer auf eine klebrige Fläche eines klebrigen Vorrichtungsteils trifft, um die Staubpartikel aus dem Gasstrom zu filtern. Vorzugsweise wird der Gasstrom, nachdem er auf den klebrigen Formkörper getroffen ist, durch diesen erneut gebrochen und/oder verwirbelt und trifft dann erneut auf die klebrige Fläche eines Formkörpers, von dem der Gasstrom erneut gebrochen und/oder verwirbelt werden kann. Dieser Vorgang muß so oft wiederholt werden, bis der Gasstrom möglichst partikelfrei ist. Wie oft sich dieser Vorgang wiederholen muß, hängt vom Einsatzgebiet, der Bauweise, insbesondere von der Fläche der eingesetzten Formkörper des Gasfilters ab. Falls der Gasfilter als Luftfilter für eine Verbrennungsmaschine verwendet wird, die im staubigen Gelände im Einsatz ist, wie dies bei einer Baumaschine der Fall sein kann, wird sich dieser Vorgang öfters wiederholen müssen als bei einem Verbrennungsmotor der in staubarmer Umgebungsluft arbeitet.

Das Gehäuse des Gasfilters kann auch mit klebrigen Formkörpern, wie oben beschrieben, die als Füllkörper im Gasfilter Verwendung finden und bei denen es sich vorzugsweise um Kugeln handelt, lose gepackt sein.
Ein Vorteil dieser Bauart ist, daß sich die Formkörper schnell und leicht austauschen lassen.

Der erfindungsgemäße Gasfilter läßt sich für die Filterung aller Gase von Partikeln benutzen, bevorzugt als Luftfilter für Klimaanlagen und besonders bevorzugt als Luftfilter für Verbrennungsmotoren einsetzen. Bei einer entsprechenden Beschichtung lassen sich auch gasförmige Stoffe absorbieren.

In einer bevorzugten Ausführungsform werden Vorrichtungsteile, die den Luftstrom im Luftfilter eines Verbrennungsmotors brechen und/oder verwirbeln und zugleich klebrig sind, eingesetzt. Diese Vorrichtungsteile sind in Form von Platten, die rund oder rechteckig sein können. Prinzipiell ist jede beliebige Gestalt möglich. Zweckmäßig ist jedoch eine runde Form, denn dann kann als Gehäuse ein Rohr verwendet werden. Die Platten können mit Hilfe von kreisförmigen Abstandshaltern im Rohr befestigt werden. Die Platten, Rohre und Abstandshalter können aus Metallen und/oder Kunststoffen hergestellt werden. Wegen des niedrigen Gewichtes werden Kunststoffe bevorzugt. Geeignet sind insbesondere gefüllte Thermoplaste wie Polyvinylchlorid, Polyethylen, Polypropylen, Polyamid usw. Aus Gründen der Umweltfreundlichkeit und Kosten werden Polyethylen oder Polypropylen bevorzugt.

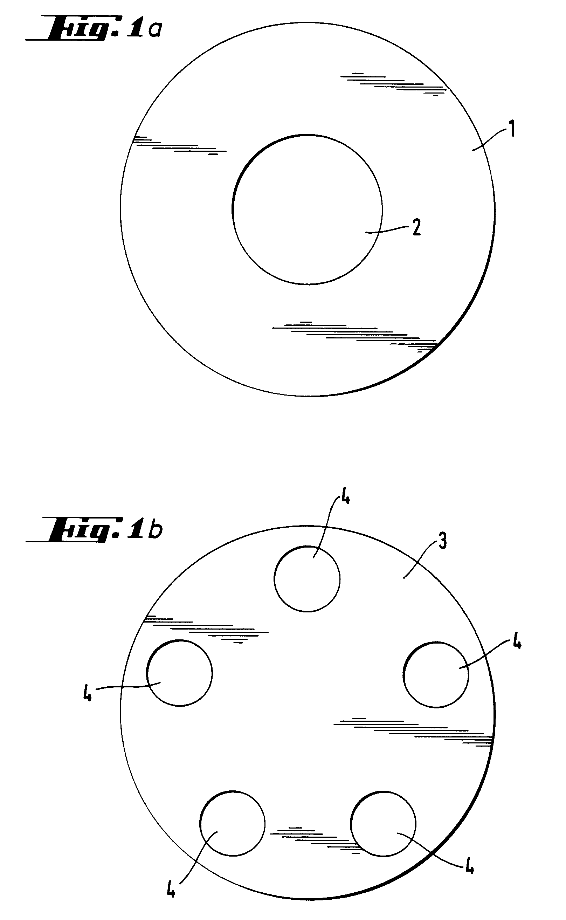

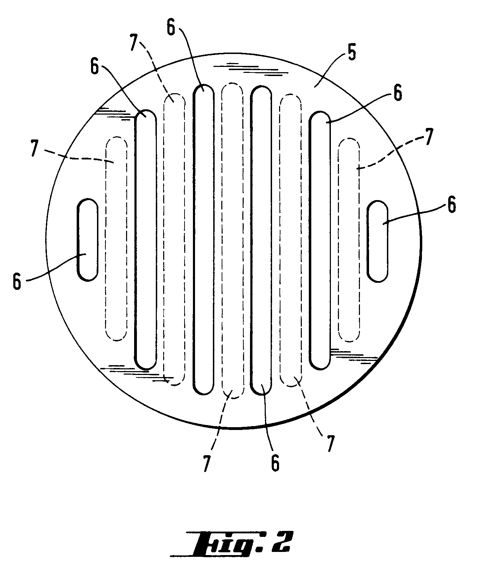

Die Luftdurchführungen (öffnungen) in den Platten können in beliebiger Form ausgeführt werden. Es kann z.B. in die Mitte einer Platte (1) ein Loch (2) geschnitten werden (Fig. 1a) und in die nächstfolgende Platte (3) mehrere Löcher (4), die weiter außen angebracht sind (Fig. 1b) usw. Ebenso können in die Platte (5) Schlitze (6) eingefräst werden, wobei jeweils bei der folgenden Platte die Schlitze (7) versetzt sein sollten (Fig. 2). Die Fläche der Öffnungen soll in jeder Platte gleich sein, damit kein Druckabfall im System entsteht. In der industriellen Fertigung werden die Platten aus Kunststoff gespritzt und es ist daher jede beliebige Gestalt möglich. Der Abstand zwischen den einzelnen Platten sollte mindestens 1 mm betragen. Er kann, wenn es strömungstechnisch in Abhängigkeit von der Gestalt der Luftdurchführungen günstiger ist, auch bis zu 50 mm oder Bauart bedingt auch erheblich mehr betragen.

Die Anzahl der Platten in der Einheit ist nicht festgelegt. Aus Gründen einer vernünftigen Reinigungskapazität sollte die Anzahl der Platten mindestens 10 betragen. Aus praktischen Gründen wird sich die Zahl der Platten auf 500 begrenzen.

Das Gehäuse, in dem sich die Platten befinden, soll der Form der Platten angepaßt sein. Wenn es ein Rohr ist, kann es gerade oder entsprechend dem Platzangebot im Motorraum beliebig geformt sein.

Ein entscheidender Vorteil des erfindungsgemäßen Gasfilters ist, daß es möglich ist, wenn die Staubaufnahmekapazität des Filters erschöpft ist, die beschichteten Platten aus dem Gehäuse herauszudrücken. Der mit Staub belegte Klebstoff kann mit geeigneten Mitteln von der Platte abgelöst, die unversehrten Platten können erneut mit Klebstoff beschichtet und in einen erfindungsgemäßen Gasfilter eingebaut werden. Je nach Art des Klebstoffes kann dieser von den Staubpartikeln separiert und wieder aufgearbeitet werden. Das System ist somit weitestgehend recyclefähig und es fallen keine Papierfilterpatronen an, die als Sondermüll entsorgt werden müssen.

Entscheidend für die Funktion des erfindungsgemäßen Gasfilters ist der Klebstoff, der die Aufgabe hat, das durchströmende Gas von den Staubpartikeln zu reinigen. Wichtig ist, daß der Gasstrom, durch geeignete Anordnung der öffnungen, so gelenkt wird, daß er immer wieder auf eine beschichtete Fläche trifft. Treffen die Staubteilchen auf eine solche Oberfläche, so bleiben sie auf dem Klebstoff haften und migrieren im Idealfall in die Klebstoffschicht ein, so daß die Oberfläche wieder unverändert zur Bindung neuer Staubpartikel zur Verfügung steht. Die Klebrigkeit der Oberfläche soll unabhängig von der Einsatztemperatur sein, die vorzugsweise zwischen 150 °C und - 65 °C betragen wird. Der Klebstoff soll leicht zu applizieren sein, umweltfreundlich sein, d.h. keine toxischen Bestandteile enthalten und keine Lösungsmittel an die Umwelt abgeben. Prinzipiell eignen sich die oben beschriebenen Klebstoffarten. Besonders gut eignen sich Silicongele mit einer permanenten Oberflächenklebrigkeit, die wegen des besonderen molekularen Aufbaus nahezu unabhängig von der Temperatur sind. Produkte dieser Art sind im Handel unter der Bezeichnung "Silgel 612" der Wacker-Chemie GmbH, München, erhältlich. Die Herstellung dieser Produkte ist in der DE 2940917 beschrieben.

Im folgenden Beispiel ist die Herstellung eines erfindungsgemäßen Gasfilters, die Wirksamkeit des Systems und die Recyclefähigkeit beschrieben. Die im Beispiel vorgenommene Ausführungsart soll beispielhaft sein, jedoch keine Einschränkung für andere Ausführungen, sei es in der Geometrie, der Gestaltung der Gasdurchführungen, den Werkstoffen, dem Klebstoff usw., die den Gedanken dieser Erfindung entsprechen, bedeuten.

Zur Herstellung des erfindungsgemäßen Gasfilters wird ein Rohr aus gefülltem Polypropylen (PP), mit einem Innendurchmesser von 50 mm, einem Außendurchmesser von 54 mm und einer Länge von 300 mm verwendet. Es werden aus einer gefüllten PP-Platte, mit einer Schichtdicke von 2 mm, 30 kreisförmige Platten mit 50 mm-Durchmesser ausgesägt. In die Hälfte der Platten wird in der Mitte ein Loch mit einem Durchmesser von 20 mm gebohrt. In die andere Hälfte der Platten werden auf einen Radius von 18 mm 5 gleich große Kreise mit einem Radius von 4,472 mm, in gleichen Abständen auf die Platte verteilt, gebohrt. Die Platten werden mit Silgel 612 A u. B, einem Produkt der Wacker-Chemie GmbH, das im Verhältnis 1 : 1 gemischt wurde, mit dem Pinsel bestrichen. Die Platten werden über Nacht im Labor stehen gelassen und die relativ dünnflüssige Masse reagiert zu einer permanent klebrigen Beschichtung mit einer Schichtdicke von ca. 100 µm. Aus einem PP-Rohr mit einem Außendurchmesser von 50 mm werden Scheiben mit einer Dicke von 8 mm geschnitten. Diese Ringe dienen als Abstandshalter zwischen den Platten. Es werden abwechselnd eine Platte mit einem Loch in der Mitte, Abstandshalter, Platte mit 5 Löchern, Abstandshalter usw. in das Rohr eingeschoben. Die mit dem Kleber beschichteten Plattenseiten sind alle in gleicher Richtung, entgegen dem Gasstrom, anzuordnen. In das Rohr werden 15 Platten mit 1 Loch und 14 Platten mit 5 Löchern eingebaut. Am Ende des Rohres wird ein Abschlußteil angebracht, in dessen Mitte sich eine Tülle befindet, an die eine Vakuumpumpe angeschlossen werden kann. Durch diesen erfindungsgemäßen Filter wird mittels einer Vakuumpumpe, mit einer Leistung von 4,3 m³ in der Stunde, Industrieluft gesaugt. Insgesamt wurden 1000 Stunden Luft durch den erfindungsgemäßen Gasfilter gesaugt. Nach dem Test wurde der Filter demontiert. Nur die ersten 4 Filterplatten sind erkennbar mit Staubpartikeln verschmutzt. Bei den übrigen Platten ist kein Staubbelag sichtbar. Das am Ende der Vorrichtung, zu Testzwecken angebrachte weiße Blaubandfilterpapier zeigte keinerlei Verfärbung, d.h. der Staub der Luft wurde im erfindungsgemäßen Gasfilter quantitativ abgeschieden. Durch diesen Versuch ist die Wirksamkeit des erfindungsgemäßen Gasfiltersystems bewiesen.

Die mit dem Klebstoff beschichteten Platten aus dem Filter wurden in eine Lösung aus Hexamethyldisiloxan und einer 0,1 %-Lösung von Phosphornitrilchlorid in Essigsäureethylester (Etrol) gelegt. Innerhalb von etwa 10 Minuten ist die verschmutzte Schicht von Staub und Siliconklebstoff völlig aufgelöst und die Platten können sauber aus dem Bad entfernt werden. Nach dem Trocknen können sie erneut beschichtet werden und in das erfindungsgemäße Gasfiltersystem eingebaut werden.

Aus der Mischung "Hexamethyldisiloxan, äquilibrierter Siliconklebstoff und Staubpartikel" lassen sich die Staubpartikel abtrennen und der Siliconanteil größtenteils wiederzurückgewinnen.

## Patentansprüche

1. Gasfilter dadurch gekennzeichnet, daß er mindestens ein Vorrichtungsteil, das klebrig oder nicht klebrig sein kann und einen Gasstrom bricht und/oder verwirbelt und mindestens ein Vorrichtungsteil, das klebrig ist und auf das der Gasstrom trifft, enthält.

2. Gasfilter nach Anspruch 1, dadurch gekennzeichnet, daß ein Vorrichtungsteil, das klebrig oder nicht klebrig sein kann und einen Gasstrom bricht und/oder verwirbelt, aus einem Material besteht, das auf einer Fläche von 5 mm² gasundurchlässig ist.

3. Gasfilter nach Anspruch 1 oder 2, dadurch gekennzeichnet, daß ein klebriges Vorrichtungsteil aus einem Material besteht, das auf einer Fläche von 5 mm² gasundurchlässig ist.

4. Gasfilter nach einem oder mehreren der Ansprüche 1 bis 3, dadurch gekennzeichnet, daß das klebrige Vorrichtungsteil einen Klebstoff auf der Basis von Kunststoffklebstoffen aufweist.

5. Gasfilter nach einem oder mehreren der Ansprüche 1 bis 4, dadurch gekennzeichnet, daß das klebrige Vorrichtungsteil einen Klebstoff auf der Basis von Silicon aufweist.

6. Gasfilter nach einem oder mehreren der Ansprüche 1 bis 5, dadurch gekennzeichnet, daß der Klebstoff in einem Temperaturbereich von 150°C bis -65°C klebrig bleibt.

7. Gasfilter nach einem oder mehreren der Ansprüche 1 bis 6, dadurch gekennzeichnet, daß der Gasfilter eine Aufnahmevorrichtung aufweist, in der sich beabstandet mindestens zwei Vorrichtungsteile befinden, von denen mindestens eines einen Klebstoff und mindestens eines eine Öffnung aufweist, die so ausgestaltet ist, daß der Gasstrom, wenn er das Vorrichtungsteil mit mindestens einer öffnung passiert hat, auf ein Vorrichtungsteil trifft, das klebrig ist und gegenüber der Öffnung des ersten Vorrichtungsteils selbst keine öffnung aufweist und so den Gasstrom wieder brechen und/oder verwirbeln kann.

8. Gasfilter nach einem oder mehreren der Ansprüche 1 bis 7, dadurch gekennzeichnet, daß das Vorrichtungsteil, das klebrig oder nicht klebrig sein kann und einen Gasstrom bricht und/oder verwirbelt und das Vorrichtungsteil, das klebrig ist, von losen Füllkörpern gebildet werden, die die gleiche Form oder unterschiedliche Form haben.

9. Verfahren zum Recycling eines Gasfilters nach einem oder mehreren der Ansprüche 1 bis 8, dadurch gekennzeichnet, daß das Vorrichtungsteil, das klebrig oder nicht klebrig sein kann und einen Gasstrom bricht und/oder verwirbelt und das Vorrichtungsteil, das klebrig ist und die nach Gebrauch eine partikelenthaltende Klebstoffschicht aufweisen, mit geeigneten Lösungsmitteln behandelt werden, um die partikelenthaltende Klebstoffschicht abzulösen und daß gegebenfalls die gereinigten Vorrichtungsteile erneut beschichtet werden und wieder in einen Gasfilter eingesetzt werden, wobei gegebenfalls die Klebstofflösung von den Partikeln befreit wird und der Klebstoff wieder zurückgewonnen wird.
